# EUROPEAN PATENT APPLICATION

(11) **EP 4 549 786 A1**
(43) Date of publication of application: **07.05.2025**
(21) Application number: 23830326.7
(22) Date of filing: 28.06.2023
(51) Int. Cl.: F16K 11/22, F16K 5/08, F04D 13/06, F04D 13/14

(54) **FLUID ASSEMBLY AND FLUID CONTROL DEVICE**

(30) Priority: 29.06.2022 CN 202210755821
(71) Applicant: ZHEJIANG SANHUA AUTOMOTIVE COMPONENTS CO., LTD., Hangzhou, Zhejiang 310018 (CN)
(72) Inventor: BAO, Junfeng, Hangzhou, Zhejiang 310018 (CN); ZHANG, Jun, Hangzhou, Zhejiang 310018 (CN); HU, Jundi, Hangzhou, Zhejiang 310018 (CN); WANG, Lixin, Hangzhou, Zhejiang 310018 (CN); WANG, Zhengwei, Hangzhou, Zhejiang 310018 (CN)
(74) Representative: Lavoix
(86) International application number: PCT/CN2023/103151
(87) International publication number: WO 2024/002153

(57) **Abstract**

A fluid assembly and a fluid control device are disclosed. The fluid assembly (1000) comprises a housing assembly (10), a valve assembly (20) and a pump assembly (30). The housing assembly comprises a first side wall portion (11), a flow channel portion (12) and a pump cover portion (13) which are in sealed connection. The housing assembly is provided with a first valve cavity (111), an accommodating cavity (131) and a fluid channel (121), the accommodating cavity being communicated with the first valve cavity via the fluid channel. The valve assembly comprises a first valve assembly (21) which comprises a first valve cartridge (211), at least part of the first valve cartridge being located in the first valve cavity. The pump assembly comprises an impeller assembly (31), at least part of the impeller assembly being arranged in the accommodating cavity. A gap is formed between at least part of the axis of the first valve cartridge and the axis of the impeller assembly, and at least part of the at least one impeller assembly and the first valve cartridge are located at different heights in the height direction of the fluid assembly. The fluid assembly can reduce the flow resistance of a fluid between fluid elements.

## Description

The present application claims the priority of the Chinese Patent Application No. 202210755821.0, titled "FLUID ASSEMBLY AND FLUID CONTROL DEVICE", filed on Jun 29, 2022 with the China National Intellectual Property Administration, which is incorporated herein by reference in its entirety.

### FIELD

The present application relates to the technical field of fluid control, and in particular to a fluid assembly and a fluid control device.

### BACKGROUND

A thermal management system generally includes at least two fluid elements, and fluid circulates between the fluid elements. It is desired to solve the problem of how to arrange the fluid elements and fluid channels between the fluid elements in order to reduce resistance to fluid flow between two fluid elements.

### SUMMARY

An object of the present application is to provide a fluid assembly and a fluid control device, which facilitate reduction of resistance to fluid flow between fluid elements.

In an aspect, a fluid assembly is provided according to an embodiment of the present application. The fluid assembly includes a housing assembly, a valve assembly and a pump assembly. The housing assembly includes a first side wall portion, a fluid channel portion and a pump cover portion. The fluid assembly has a first valve cavity, an accommodating cavity and a fluid channel. The first side wall portion forms at least part of a wall portion of the first valve cavity, and the fluid channel portion forms at least part of a wall portion of the fluid channel, and the pump cover portion forms at least part of a wall portion of the accommodating cavity. The accommodating cavity is in communication with the fluid channel. The first side wall portion has a port, and the port is in communication with the fluid channel.

The valve assembly includes a first valve assembly. The first valve assembly includes a first valve core, at least part of which is located in the first valve cavity. The pump assembly includes an impeller assembly, at least part of which is located in the accommodating cavity.

There is spacing between at least part of an axis of the first valve core and an axis of the impeller assembly. In a height direction of the fluid assembly, an end of at least one impeller assembly and an end of the first valve core close to the impeller assembly are at different heights.

In another aspect, a fluid control device is further provided according to an embodiment of the present application, which includes a driving assembly and the fluid assembly described above. The driving assembly includes a stator assembly and a motor. The pump assembly further includes a rotor assembly, which is configured to be located in a magnetic field range of the stator assembly. The rotor assembly is in transmission connection with the impeller assembly, and the motor is in transmission connection with the first valve core.

According to the fluid assembly and the fluid control device provided by the embodiment of the present application, the fluid assembly includes a housing assembly, a control valve assembly and a pump assembly. The housing assembly is provided with a first valve cavity, an accommodating cavity and a fluid channel. The accommodating cavity is in communication with the first valve cavity through the fluid channel, and at least part of the first valve core of the control valve assembly is located in the first valve cavity. At least part of the impeller assembly of the pump assembly is located in the accommodating cavity, so as to facilitate fluid circulation between the pump assembly and the control valve assembly. There is spacing between an axis of the impeller assembly and at least part of an axis of the first valve core, and in a height direction of the fluid assembly, an end of at least one impeller assembly close to the first valve core and an end of the first valve core close to the impeller assembly are arranged at different heights, which facilitates reducing a complexity of the fluid channel portion between the impeller assembly and the first valve core and reducing the resistance to fluid flow between the pump assembly and the control valve assembly.

### BRIEF DESCRIPTION OF THE DRAWINGS

FIG. 1 is a schematic exploded structural view of a fluid control device provided according to an embodiment of the present application;
FIG 2 is a schematic perspective structural view of the fluid control device shown in FIG. 1;
FIG. 3 is a schematic perspective structural view of a driving assembly provided according to an embodiment of the present application;
FIG. 4 is a schematic partial sectional structural view of the driving assembly shown in FIG. 3;
FIG. 5 is a schematic partial exploded structural view of the fluid control device shown in FIG. 2;
FIG 6 is a schematic perspective structural view of a fluid assembly provided according to an embodiment of the present application;
FIG. 7 is a schematic sectional structural view of the fluid assembly shown in FIG. 6 at a first position;
FIG. 8 is a schematic sectional structural view of the fluid assembly shown in FIG. 6 at a second position;
FIG. 9 is a schematic perspective structural view of a housing assembly provided according to an embodiment of the present application;
FIG. 10 is a schematic sectional structural view of the fluid assembly shown in FIG. 6 at a third position;
FIG. 11 is a schematic partial sectional structural view of a fluid assembly provided according to another embodiment of the present application;
FIG. 12 is another schematic perspective structural view of a housing assembly shown in FIG. 9;
FIG. 13 is a schematic sectional structural view of the fluid assembly shown in FIG. 6 at a fourth position; and
FIG. 14 is a schematic sectional structural view of the fluid assembly shown in FIG. 6 at a fifth position.

### DETAILED DESCRIPTION OF THE EMBODIMENTS

The features and exemplary embodiments of various aspects of the present application are described in detail below. To make the objects, solutions and advantages of the present application more clear and apparent, the present application is described in detail in conjunction with the drawings and the specific embodiments. Moreover, relational terms such as "first" and "second" and the like are only used to distinguish one element from another having the same name and do not necessarily require or imply any such actual existence of relationship or order between those elements.

A fluid assembly provided according to an embodiment of the present application can be applied to a thermal management system, for example, a vehicle thermal management system, and can control fluid to a realize fluid circulation in the thermal management system.

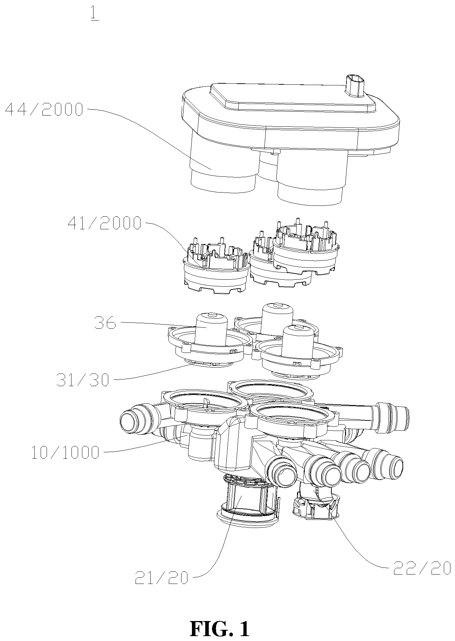

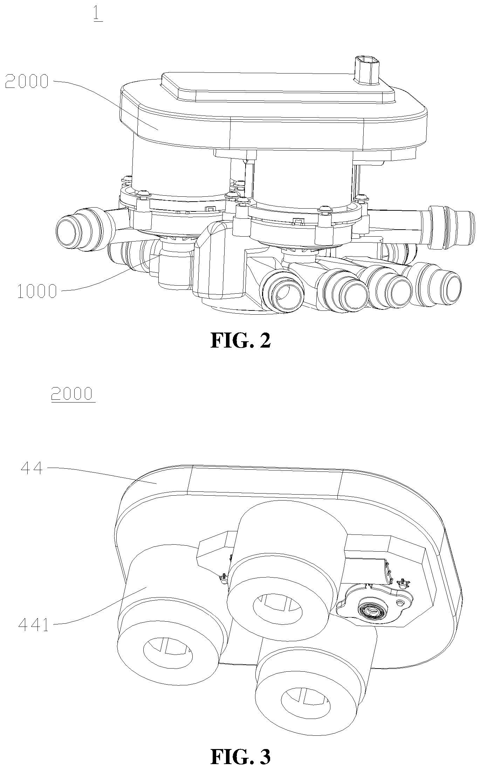

As shown in FIGS. 1 to 10, a fluid control device 1 is provided according to an embodiment of the present application, including a driving assembly 2000 and a fluid assembly 1000 which are hermetically arranged. At least part of the driving assembly 2000 and at least part of the fluid assembly 1000 are arranged in the height direction of the fluid control device 1. The driving assembly 2000 includes a driving housing 44, a motor 42 and a stator assembly 41. The motor 42 and the stator assembly 41 are connected to the corresponding parts of the driving housing 44 in a position-limiting way. Optionally, the driving housing 44 has a chamber, and at least part of the motor 42 and of the stator assembly 41 are located in the chamber. The stator assembly 41 may be fixed to the driving housing 44 by injection molding, or assembled with the driving housing 44 in a position-limiting way. The fluid assembly 1000 includes a valve assembly 20 and a pump assembly 30. The valve assembly 20 includes a first valve assembly 21, which includes a first valve core 211 and a first transmission shaft 212. The pump assembly 30 includes an impeller assembly 31, and a rotor assembly 35 for driving the impeller assembly 31 to rotate. The driving assembly 2000 is assembled with the fluid assembly 1000 in a position-limiting way, such that the rotor assembly 35 may be located in a magnetic field range of the corresponding stator assembly 41. A magnetic field is generated when the stator assembly 41 is energized, and the rotor assembly 35 rotates under an action of the magnetic field, thereby driving the impeller assembly 31 to rotate. The first valve core 211 is in transmission connection to the motor 42 via the first transmission shaft 212. When the motor 42 rotates, it may drive the first transmission shaft 212 to rotate, which in turn drives the first valve core 211 to rotate. Optionally, the driving assembly 2000 may further include a gear assembly 45, and the motor 42 is in transmission connection to the first transmission shaft 212 via the gear assembly 45, so that the motor 42 may actuate the first valve core 211.

A fluid assembly 1000 is provided according to an embodiment of the present application, which may facilitate fluid circulation between the valve assembly 20 and the pump assembly 30 and may be used in the above-mentioned fluid control device 1. The fluid assembly 1000 provided according to an embodiment of the present application will be described below.

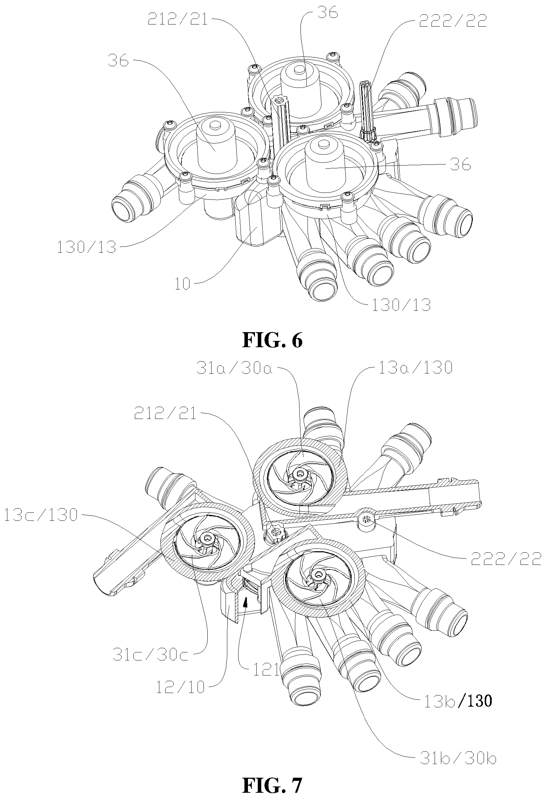

As shown in FIGS. 6 to 10, in some embodiments, the fluid assembly 1000 includes a valve assembly 20, a pump assembly 30, and a housing assembly 10. The housing assembly 10 includes a first side wall portion 11, a fluid channel portion 12, and a pump cover portion 13 which are hermetically connected. The housing assembly 10 has a first valve cavity 111, an accommodating cavity 131, and a fluid channel 121. The first side wall portion 11 forms at least part of a wall portion of the first valve cavity 111, and the fluid channel portion 12 forms at least part of a wall portion of the fluid channel 121, and the pump cover portion 13 forms at least part of a wall portion of the accommodating cavity 131. The accommodating cavity 131 is in communication with the first valve cavity 111 at least through the fluid channel 121. In this case, the accommodating cavity 131 is in communication with the fluid channel 121, and the fluid channel 121 is in communication with the first valve cavity 111. At least part of the first valve core 211 is located in the first valve cavity 111. The pump assembly 30 includes an impeller assembly 31, and at least part of the impeller assembly 31 is located in the accommodating cavity 131. By providing the fluid channel portion 12, the fluid circulation between the first valve assembly 21 and the pump assembly 30 can be realized. The number of the pump assemblies 30 may be determined based on the requirements of users or thermal management systems. For example, the number of the pump assemblies 30 may be one, two, three or more. The number of pump cover portions 13 may be the same as that of pump assemblies 30. Correspondingly, the number of the fluid channel portions 12 is the same as that of pump cover portions 13, so as to communicate the fluid in the pump cover portions 13 to the control valve assemblies 30. In this embodiment, the number of the pump assemblies 30 is three, and correspondingly the number of the pump cover portions 13 is three. The three pump cover portions 13 are all in communication with the first valve cavity 111 through the corresponding fluid channels 121, which facilitates realization of the fluid circulation between the pump assembly 30 and the first valve assembly 21.

In some embodiments, the valve assembly 20 may further include a second valve assembly 22, which includes a second valve core 221. The housing assembly 10 further includes a second side wall portion 16, and the housing assembly 10 further has a second valve cavity 161. The first valve cavity 111 and the second valve cavity 161 are arranged in parallel and communicate with each other in a direction intersecting with an axial direction of the first valve core 211, for example, in a direction perpendicular to the axial direction of the first valve core 211. In the direction intersecting with the axial direction of the first valve core 211, the second side wall portion 16 and the first side wall portion 141 are arranged in parallel and spaced apart. The second side wall portion 16 forms at least part of a wall portion of the second valve cavity 161, and at least part of the second valve core 221 is located in the second valve cavity 161. With the above arrangement, the fluid can circulate between the first valve core 211 and the second valve core 221.

In order to improve a sealing performance of the housing assembly 10 and reduce the assembly complexity of the housing assembly 10, optionally, at least one of the first side wall portion 11 and the pump cover portion 13 is fixed to the fluid channel portion 12 into an integral structure, for example, by injection molding. For example, in this embodiment, the first side wall portion 11, the pump cover portion 13 and the fluid channel portion 12 are all integrally injection-molded to better realize the sealing arrangement thereof. Moreover, it can simplify the manufacturing process, and reduce or omit the pipeline connection between the first side wall portion 11 and the pump cover portion 13, and facilitate an integration of the valve assembly 20 and the pump assembly 30, compared with the solution in which these parts are formed separately and then assembled in the sealed manner.

With reference to FIGS. 6 to 10, in some embodiments, in the height direction of the fluid assembly 1000, at least part of the at least one impeller assembly 31 is located at the different height from the first valve core 211. Optionally, an end of the at least one impeller assembly 31 close to the first valve core 211 and an end of a communicating cavity structure in the first valve core 211 close to the impeller assembly 31 are located at different heights. At least part of the fluid channel portion 12 is located at an outer peripheral side of the first side wall portion 11, and an extending direction of at least part of the fluid channel portion 12 intersects with an extending direction of the first side wall portion 11. In this case, at least part of the axis of the first valve core 211 does not coincide with the axis of the impeller assembly 31, that is, there is a spacing between at least part of the axis of the first valve core 211 and the axis of the impeller assembly 31. For example, the axis of the first valve core 211 is parallel to or intersects with the axis of the impeller assembly 31. With the above arrangement, the fluid channel portion 12 can be arranged based on the requirement of the fluid assembly, and the structure of the fluid channel portion 12 between the impeller assembly 31 and the first valve core 211 can be simplified, so as to reduce the resistance to fluid flow between the pump assembly 30 and the valve assembly 20. Herein, the height direction of the fluid assembly is parallel to or coincident with the axial direction of the first valve core 211.

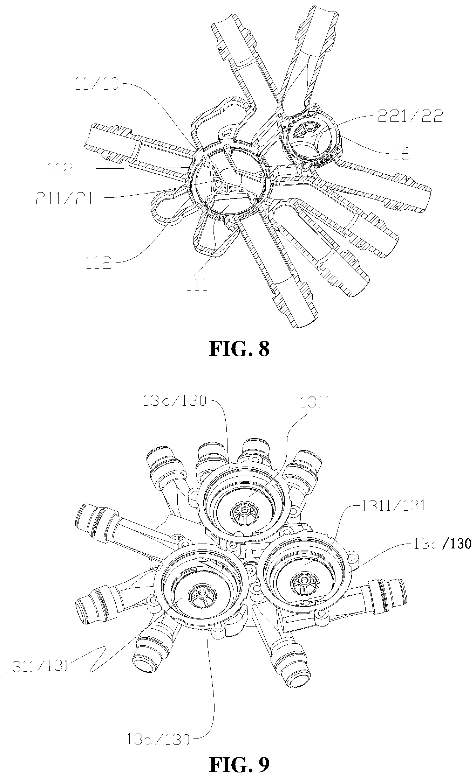

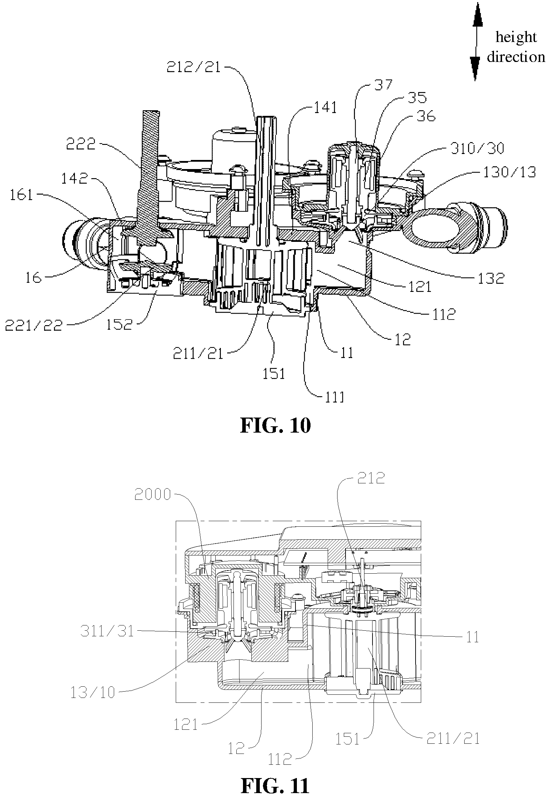

Herein, the impeller assembly 31 located at the different height from the first valve core 211 in the height direction of the fluid assembly 1000 is defined as the first impeller assembly 310. Based on this, the pump cover portion 13 includes a first pump cover portion 130, and the accommodating cavity 131 includes a first accommodating cavity 1311, which is located in the first pump cover portion 130. As shown in FIGS. 9 and 10, at least part of the first impeller assembly 310 is located in the accommodating cavity 131 of the first pump cover portion 130, that is, at least part of the first impeller assembly 310 is located in the first accommodating cavity 1311. In the height direction of the fluid assembly 1000, the first pump cover portion 130 is at least partially arranged at the different height from the first side wall portion 11, and an orthographic projection of the first pump cover portion 130 at least partially overlaps with an orthographic projection of the first side wall portion 11. With the above arrangement, a space occupied by the fluid assembly 1000 can be reduced, so that the fluid assembly 1000 is more compact, and a length of the fluid channel portion 12 between the pump assembly 30 and the first valve assembly 21 can be reduced, further facilitating the reduction of fluid flow resistance.

Further, in some embodiments, in the height direction of the fluid assembly 1000, when the orthographic projection of the first pump cover portion 130 at least partially overlaps with the orthographic projection of the first side wall portion 11, the orthographic projection of the first impeller assembly 310 may be spaced from the orthographic projection of the first side wall portion 11. Alternatively, in the height direction of the fluid assembly 1000, the orthographic projection of the first impeller assembly 310 at least partially overlaps with the orthographic projection of the first side wall portion 11, and the orthographic projection of the first impeller assembly 310 is spaced from the orthographic projection of the first valve core 211. Alternatively, as shown in FIG. 10, in the height direction of the fluid assembly 1000, the orthographic projection of the first impeller assembly 310 at least partially overlaps with the orthographic projection of the first valve core 211. With the above arrangement, the size of the fluid assembly 1000 in a direction perpendicular to the height direction can be reduced based on the requirements of users, so that the structure of the fluid assembly 1000 is compact. When the number of the first impeller assemblies 310 is at least two and the number of the first pump cover portions 130 is at least two, the first pump cover portions 130, the corresponding first impeller assemblies 310, the first valve core 310 and the first side wall portion 11 may be positioned according to any of the above-mentioned projected structural relationships, and all of the first impeller assemblies 310, the first pump cover portions 130, the first valve core 310 and the first side wall portion 11 may be in the same or different positional relationships.

In some embodiments, when the fluid assembly 1000 includes at least two pump assemblies 30, in the height direction of the fluid assembly 1000, all of the impeller assemblies 31 of the pump assemblies 30 are located at the same height and are located at different heights from the first valve core 211. Alternatively, a part of the impeller assemblies 31 of the pump assemblies 30 are located at different heights from the first valve core 211, as shown in FIGS. 8 and 11, and the other part of the impeller assemblies 31 of the pump assemblies 30 are at least partially located at the same height as part of the first valve core 211. It is defined that the impeller assemblies 31 at least partially located at the same height as part of the first valve core 211 in the height direction of the fluid assembly 1000 are second impeller assemblies 311. The number of the first impeller assemblies 310 and the second impeller assemblies 311 may be determined based on the requirement of the users.

Further, in the height direction of the fluid assembly 1000, the orthographic projections of all of the impeller assemblies 31 of the pump assemblies 30 at least partially overlap with the orthographic projection of the first valve core 211. Alternatively, as shown in FIGS. 8 and 11, when a part of the impeller assemblies 31 of the pump assemblies 30 is at least partially located at the same height as part of the first valve core 211, the orthogonal projection of the impeller assembly 31 in this pump assembly 30 in the height direction is spaced apart from the orthogonal projection of the first valve core 211 in the height direction, that is, the orthogonal projection of the second impeller assembly 311 in the height direction is spaced apart from the orthogonal projection of the first valve core 211 in the height direction. With the above arrangement, the fluid channel portion 12 can be diversified based on the arrangement of the pump assembly 20 and the first valve assembly 21 of the fluid assembly 1000, so as to simplify the structure of the fluid channel portion 12, thereby facilitating the reduction of fluid flow resistance.

In a specific implementation, the fluid assembly 1000 provided according to the embodiment of the present application has three pump assemblies 30. The corresponding impeller assemblies 31 of the three pump assemblies 30 are located at different heights from the first valve core 211 in the height direction of the fluid assembly. That is, the corresponding impeller assemblies 31 of the three pump assemblies 30 are all first impeller assemblies 310, and the three first impeller assemblies 310 may be located at the same height or different heights, which is not limited by the present application. Optionally, the corresponding impeller assemblies 31 in the three pump assemblies 30 may all be the first impeller assembly 310.

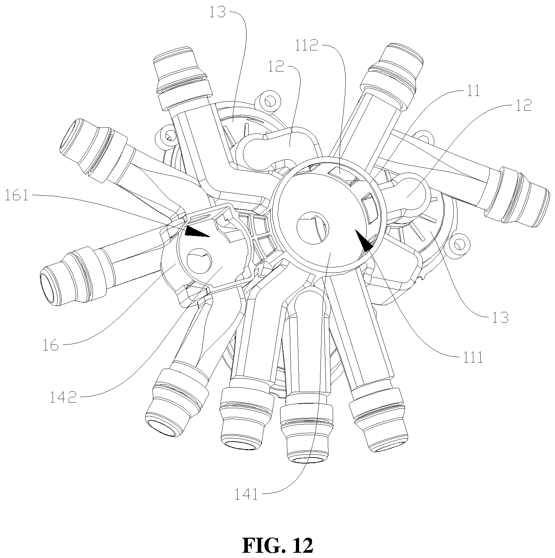

As shown in FIGS. 9, 10, and 12 to 14, in order to realize a fluid driving function of the pump assembly 30, in some embodiments, the first pump cover portion 130 further has a first pore passage 132 and a second pore passage 133, both of which are in communication with the corresponding accommodating cavity 131. In the same first pump cover portion 130, both of the first pore passage 132 and the second pore passage 133 are in communication with the first accommodating cavity 1311. At least part of the first pore passage 132 is arranged to be in correspondence to and coaxial with the first impeller assembly 310. In this case, the first pore passage 132 may be an inlet of the corresponding pump assembly 30. An opening at one side of the second pore passage 133 is located at an outer peripheral edge of the first impeller assembly 310. In this case, the second pore passage 133 may be an outlet of the corresponding pump assembly 30. By the rotation of the impeller assembly 31 located in the accommodating cavity 131, the fluid 31 may be circulated between the first pore passage 132 and the second pore passage 133. The first side wall portion 11 has a port 112, which is in communication with the fluid channel 121. One of the first pore passage 132 and the second pore passage 133 of the first pump cover portion 130 is in communication with the port 112 through the fluid channel 121. With the above arrangement, the fluid circulation between the pump assembly 30 and the first valve assembly 21 can be realized.

As shown in FIG. 10, in some embodiments, the first pore passage 132 of the first pump cover portion 130 is in communication with the fluid channel 121. When the first pore passage 132 of the first pump cover portion 130 is in communication with the first valve cavity 111 through the fluid channel 121, at least part of the wall portion of the first pore passage 132 of the first pump cover portion 130 is at the same height as part of the first side wall portion 11 in the height direction of the fluid assembly 1000, and the fluid channel portion 12 is connected between the first side wall portion 11 and the wall portion of the first pore passage 132. With the above arrangement, it facilitates simplifying the structure of the fluid channel portion 12 and reducing the flow resistance of the fluid flowing in the fluid channel portion 12.

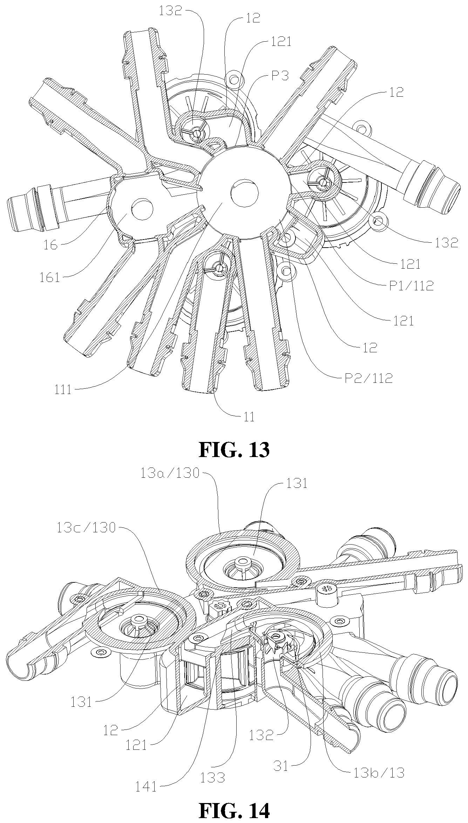

As shown in FIG. 14, in some embodiments, the housing assembly 10 further includes a first top wall portion 141, which is hermetically connected with the first side wall portion 11 and forms a part of the wall portion of the first valve cavity 111. When the second pore passage 133 of the first pump cover portion 130 is in communication with the first valve cavity 111 through the fluid channel 121, the opening at one side of the second pore passage 133 is located at the outer peripheral edge of the first impeller assembly 310, and the opening at the other side of the second pore passage 133 is located at a side of the first top wall portion 141 facing away from the first valve cavity 111. The first top wall portion 141 forms a part of the wall portion of the fluid channel 121, and the fluid channel portion 12 forms another part of the wall portion of the fluid channel 121. With the above arrangement, the first top wall portion 141 can be reasonably used to form a part of the wall portion of the fluid channel 121, so that the structure of the fluid assembly is compact.

With further reference to FIGS. 1 to 14, in some embodiments, the first side wall portion 11 has a port 112 which is in communication with the first valve cavity 111. The port 112 includes a first port P1 and a second port P2 which are spaced from each other. As shown in FIG. 10, the ports 112 are arranged in a circumferential direction of the first side wall portion 11, and the first port P1 and the second port P2 are arranged adjacent to each other. The number of the pump assemblies 30 is at least two, and the number of the pump cover portions 13 is the same as that of the pump assemblies 30. The first pore passage 132 corresponding to at least one pump assembly 30 is in communication with the first port P1 through one fluid channel 121, and the second pore passage 133 corresponding to at least another pump assembly 30 is in communication with the second port P2 through another fluid channel 121. With the above arrangement, the fluid circulation between the two pump assemblies 30 and one valve assembly 20 can be realized.

In some embodiments, as shown in FIG. 13, the port 112 further includes a third port P3, which is spaced apart from the first port P1 and the second port P2. In the circumferential direction of the first valve assembly 21, at least one communication opening is provided between the third port P3 and the first port P1, and at least one communication opening is provided between the third port P3 and the second port P2. In this case, the number of the pump assemblies 30 is at least three, and the first pore passage 132 corresponding to at least another pump assembly 30 is in communication with the third port P3 through another fluid channel 121.

With reference to FIGS. 6 to 14, in order to describe the communication relationship between the first pump cover portions 130 corresponding to the three pump assemblies 30 and the first valve cavity 111 corresponding to the first valve assembly 21 in this embodiment, the first pump cover portions 130 corresponding to the three pump assemblies 30 are defined as a first sub-cover portion 13a, a second sub-cover portion 13b and a third sub-cover portion 13c, respectively. The three pump assemblies 30 are defined as a first pump component 30a, a second pump component 30b and a third pump component 30c, respectively. The first pump component 30a includes a first impeller component 31a, and the second pump component 30b includes a second impeller component 31b, and the third pump component 30c includes a third impeller component 31c. At least part of the first impeller component 31a is located in the accommodating cavity 131 of the first sub-cover portion 13a, and at least part of the second impeller component 31b is located in the accommodating cavity 131 of the second sub-cover portion 13b, and at least part of the third impeller component 31c is located in the accommodating cavity of the third sub-cover portion 13c. In the height direction of the fluid assembly 1000, the first impeller component 31a, the second impeller component 31b and the third impeller component 31c may be located at the same height and located at different heights from the first valve core 211. The first pore passage 132 of the first sub-cover portion 13a is in communication with the first valve cavity 111 through one fluid channel 112, and the second pore passage 133 of the second sub-cover portion 13b is in communication with the first valve cavity 111 through another fluid channel 112, and the first pore passage 132 of the third sub-cover portion 13c is in communication with the first valve cavity 111 through yet another fluid channel 112. With the above arrangement, when the first side wall portion 11, the fluid channel portion 12 and the pump cover portion 13 are formed into an integrated structure, the integration of the three pump assemblies 20 and the first valve assembly 21 can be realized, thus facilitating the fluid circulation between the three pump assemblies 20 and the first valve assembly 21.

In order to realize the operating mode of the fluid assembly 1000, in some implementations, the valve assembly 20 further includes a second valve assembly 22, and the housing assembly 10 further includes a second side wall portion 16. The housing assembly 10 further has a second valve cavity 161, and the second side wall portion 16 forms at least part of a peripheral wall of the second valve cavity 161. The second valve assembly 22 includes a second valve core 221, at least part of which is located in the second valve cavity 161, and the second valve cavity 161 is in communication with the first valve cavity 111. The second valve core 221 may be a three-way valve core, and the first valve core 211 may be an eight-way valve core. In order to seal the first valve cavity 111 and the second valve cavity 161, the housing assembly 10 may further include a first bottom cover portion 151, a second bottom cover portion 152, a first top wall portion 141 and a second top wall portion 142. One of the first bottom cover portion 151 and the first top wall portion 141 is fixed to the first side wall portion 11 by injection molding, and the other is welded and sealed with the first side wall portion 11. One of the second bottom cover portion 152 and the second top wall portion 142 is fixed to the second side wall portion 16 by injection molding, and the other is welded and sealed with the second side wall portion 16.

In order to realize the stable rotation of the impeller assembly 31, in some embodiments, the pump assembly 30 further includes a pump shaft 37, a rotor assembly 35 and an isolation sleeve 36. The rotor assembly 35 may be located within the magnetic field range of the stator assembly 41. In this embodiment, the pump shaft 37, the rotor assembly 35, the isolation sleeve 36 and the impeller assembly 31 may be assembled into an integrated structure and then hermetically connected to the housing assembly 10. The pump shaft 37 is connected to the isolation sleeve 36 in a position-limiting way. For example, the pump shaft 37 and the isolation sleeve 36 may be fixed by injection molding or in interference fit with each other to realize the position-limiting connection between them. The rotor assembly 35 is arranged on the outer circumferential side of the pump shaft 37, and the stator assembly 41 is located outside at least part of the outer circumferential side of the rotor assembly 35. The isolation sleeve 36 is located between the rotor assembly 35 and the stator assembly 41. The rotor assembly 35 is in transmission connection with the impeller assembly 31, and the rotor assembly 35 may be located in the magnetic field range of the stator assembly 41, which is convenient to drive the rotor assembly 35 to rotate when the stator assembly 41 is energized, thus enabling the rotor assembly 35 to drive the impeller assembly 31 to rotate.

Further, for the driving assembly 2000, the driving housing 44 has a chamber, in which at least part of the motor 42 is located, and the stator assembly 41 is connected to the drive housing 44 in a position-limiting way. Herein, the position-limiting connection may be an assembled limiting connection or a fixed integrated structure. For example, the driving housing 44 may include a position-limiting portion 441, and the stator assembly 41 is assembled into the pore passage of the position-limiting portion 441 or fixed to the position-limiting portion 441 as an insert by injection molding. The first valve assembly 21 may further include a first transmission shaft 212, which is in transmission connection with the first valve core 211. Optionally, the first transmission shaft 212 and the first valve core 211 may be injection-molded into an integral structure or be interference-fitted or welded with each other, so that the driving force can be transmitted between them. One of the motors 42 is in transmission connection with the first transmission shaft 212, for example, the motor 42 may be in transmission connection to the first transmission shaft 212 through a gear assembly. The second valve assembly 22 may further include a second transmission shaft 222, and one of the motors 42 is in transmission connection with the second valve core 221. Optionally, the second transmission shaft 222 and the first valve core 221 may be injection-molded into an integral structure or be interference-fitted or welded with each other, so that the driving force can be transmitted between them.

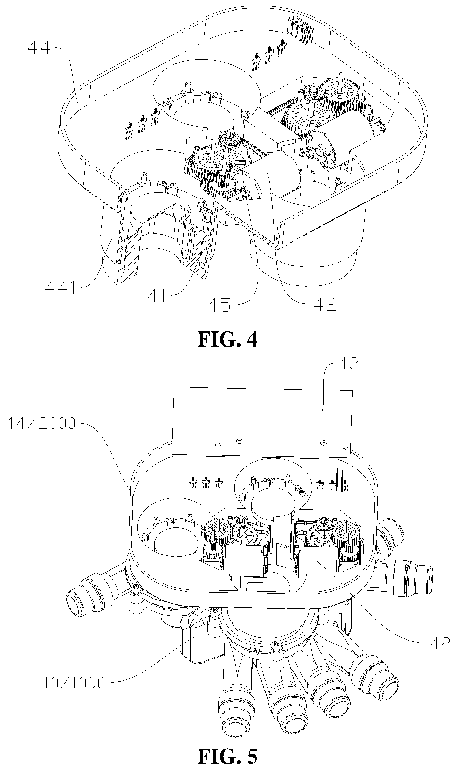

As shown in FIGS. 4 and 5, in the height direction of the fluid assembly 1000, the stator assembly 41 and the motor 42 are both located at a same side of the first valve assembly 21, and both of them are connected with the same driving housing 44 in a position-limiting way. Alternatively, the stator assembly 41 and the motor 42 are located at both sides of the first valve assembly 21 in the axial direction, and are connected with their corresponding driving housings 44 in a position-limiting way.

In order to control the pump assembly 30 and the valve assembly 20, the fluid assembly 1000 may further include a control member 43 located in the chamber of the driving housing 44, and the control member 43 may be electrically connected to the stator assembly 41 and the motor 42.

The fluid assembly 1000 and the fluid control device 1 provided by the embodiment of the present application are summarized below. The fluid assembly 1000 includes the housing assembly 10, the valve assembly 20 and the pump assembly 30. The housing assembly 10 has the first valve cavity 111, the accommodating cavity 131 and the fluid channel 121, and the accommodating cavity 131 is in communication with the first valve cavity 111 through the fluid channel 131. At least part of the first valve core 211 of the valve assembly 20 is located in the first valve cavity 111, and at least part of the impeller assembly 31 of the pump assembly 30 is located in the accommodating cavity 131, so as to facilitate the fluid circulation between the pump assembly 30 and the valve assembly 20. In the height direction of the fluid assembly 1000, at least one of the impeller assemblies 31 is at least partially located at the different height from the first valve core 211, and the extending direction of at least part of the fluid channel portion 12 intersects with the extending direction of the first side wall portion 11, so as to reduce the complexity of the fluid channel portion 12 between the impeller assembly 31 and the first valve core 211, and reduce the resistance to fluid flow between the pump assembly 30 and the valve assembly 20.

It should be noted that the above embodiments are only used to illustrate the present application, and not to limit the technical solution described according to the present application, such as the definition of directionality such as "front", "rear", "left", "right", "up" and "down". In this specification, the present application has been described in detail with reference to the above embodiments, however, those skilled in the art should understand that they can still make modification, combination or equivalently replacement of the present application, and all technical solutions and improvements that do not depart from the spirit and scope of the present application shall fall within the scope claimed by the claims of the present application.

## Claims

1. A fluid assembly (1000), comprising a housing assembly (10), a valve assembly (20) and a pump assembly (30), wherein
the housing assembly (10) comprises a first side wall portion (11), a fluid channel portion (12) and a pump cover portion (13),
the fluid assembly (1000) has a first valve cavity (111), an accommodating cavity (131) and a fluid channel (121), wherein the first side wall portion (11) forms at least part of a wall portion of the first valve cavity (111), the fluid channel portion (12) forms at least part of a wall portion of the fluid channel (121), the pump cover portion (13) forms at least part of a wall portion of the accommodating cavity (131), and the accommodating cavity (131) is in communication with the fluid channel (121),
the first side wall portion (11) has a port (112), and the port (112) is in communication with the fluid channel (121),
the valve assembly (20) comprises a first valve assembly (21), wherein the first valve assembly (21) comprises a first valve core (211), at least part of which is located in the first valve cavity (111), and the pump assembly (30) comprises an impeller assembly (31), at least part of which is located in the accommodating cavity (131),
there is a spacing between at least part of an axis of the first valve core (211) and an axis of the impeller assembly (31), and in a height direction of the fluid assembly (1000), an end of at least one impeller assembly (31) close to the first valve core (211) and an end of the first valve core (211) close to the impeller assembly (31) are located at different heights.

2. The fluid assembly (1000) according to claim 1, wherein the impeller assembly (31) located at the different height from the first valve core (211) in the height direction of the fluid assembly (1000) is defined as a first impeller assembly (310);
the pump cover portion (13) comprises a first pump cover portion (130), and the accommodating cavity (131) comprises a first accommodating cavity (1311), wherein the first pump cover portion (130) forms at least part of the wall portion of the first accommodating cavity (1311), and at least part of the first impeller assembly (310) is located in the first accommodating cavity (1311); and
in the height direction of the fluid assembly (1000), at least part of the first pump cover portion (130) and at least part of the first side wall portion (11) are arranged at different heights, and an orthographic projection of the first pump cover portion (130) at least partially overlaps with an orthographic projection of the first side wall portion (11).

3. The fluid assembly (1000) according to claim 2, wherein in the height direction of the fluid assembly (1000), the orthographic projection of the first impeller assembly (310) is spaced from the orthographic projection of the first side wall portion (11) by a preset distance.

4. The fluid assembly (1000) according to claim 2, wherein in the height direction of the fluid assembly (1000), the orthographic projection of the first impeller assembly (310) at least partially overlaps with the orthographic projection of the first side wall portion (11), and the orthographic projection of the first impeller assembly (310) is spaced from the orthographic projection of the first valve core (211).

5. The fluid assembly (1000) according to claim 2, wherein the orthographic projection of the first impeller assembly (310) at least partially overlaps with the orthographic projection of the first valve core (211) in the height direction of the fluid assembly (1000).

6. The fluid assembly (1000) according to any one of claims 2 to 5, wherein the first pump cover portion (130) further has a first pore passage (132) and a second pore passage (133),
in the same first pump cover portion (130), the first pore passage (132) and the second pore passage (133) are both in communication with the first accommodating cavity (1311), at least part of the first pore passage (132) is coaxially arranged with the first impeller assembly (310), and an opening at one side of the second pore passage (133) is located at an outer peripheral edge of the first impeller assembly (310); and
one of the first pore passage (132) and the second pore passage (133) of the first pump cover portion (130) is in communication with the fluid channel (121).

7. The fluid assembly (1000) according to claim 6, wherein the first pore passage (132) of the first pump cover portion (130) is in communication with the fluid channel (121); and
in the height direction of the fluid assembly (1000), at least part of the wall portion of the first pore passage (132) is located at the same height as part of the first side wall portion (11), and the fluid channel portion (12) is connected between the first side wall portion (11) and the wall portion of the first pore passage (132).

8. The fluid assembly (1000) according to claim 6, wherein the second pore passage (133) of the first pump cover portion (130) is in communication with the first valve cavity (111) through the fluid channel (121);
the housing assembly (10) further comprises a first top wall portion (141), which is connected with the first side wall portion (11) in a sealed manner and forms a part of the wall portion of the first valve cavity (111), and an opening on the other side of the second pore passage (133) is located at a side of the first top wall portion (141) facing away from the first valve cavity (111), and
the first top wall portion (141) forms a part of the wall portion of the fluid channel (121), and the fluid channel portion (12) forms another part of the wall portion of the fluid channel (121).

9. The fluid assembly (1000) according to any one of claims 1 to 5, wherein the first side wall portion (11) has a port (112), which is in communication with the first valve cavity (111) and comprises a first port (P1) and a second port (P2) which are spaced from each other; and
the number of the pump assemblies (30) is at least two, and the number of the pump cover portions (13) is the same as that of the pump assemblies (30), wherein the first pore passage (132) corresponding to at least one of the pump assemblies (30) is in communication with the first port (P1) through one of the fluid channels (121), and the second pore passage (133) corresponding to at least another pump assembly (30) is in communication with the second port (P2) through another fluid channel (121).

10. The fluid assembly (1000) according to claim 9, wherein the port (112) further comprises a third port (P3), and the third port (P3) is spaced from both the first port (P1) and the second port (P2); and
the number of the pump assemblies (30) is at least three, wherein the first pore passage (132) corresponding to at least another pump assembly (30) is in communication with the third port (P3) through another fluid channel (121).

11. The fluid assembly (1000) according to claim 10, wherein in the height direction of the fluid assembly (1000), all of the impeller assemblies (31) of the pump assemblies (30) are located at the same height and arranged at different heights from the first valve core (211); or
part of the impeller assemblies (31) of the pump assemblies (30) and the first valve core (211) are arranged at different heights, and the other part of the impeller assemblies (31) is at least partially located at the same height as part of the first valve core (211).

12. The fluid assembly (1000) according to any one of claims 1 to 5, wherein at least one of the first side wall portion (11) and the pump cover portion (13) is fixed to the fluid channel portion (12) to be an integral structure.

13. The fluid assembly (1000) according to any of claims 1 to 5, wherein the valve assembly (20) further comprises a second valve assembly (22), and the housing assembly (10) further has a second valve cavity (161), and at least part of the second valve assembly (22) is located in the second valve cavity (161), and the second valve cavity (161) is in communication with the first valve cavity (111).

14. A fluid control device (1), comprising a driving assembly (2000) and the fluid assembly (1000) according to any one of claims 1 to 13, wherein the driving assembly (2000) comprises a stator assembly (41) and a motor (42), and the pump assembly (30) further comprises a rotor assembly (35), wherein the rotor assembly (35) is located in a magnetic field range of the stator assembly (41), the rotor assembly (35) is in transmission connection with the impeller assembly (31), and the motor (42) is in transmission connection with the first valve core (211).

15. The fluid control device (1) according to claim 14, wherein the stator assembly (41) and the motor (42) are both located at a same side of the first valve assembly (21) in the height direction of the fluid assembly (1000), and the stator assembly (41) and the motor (42) are both connected with the same driving housing (44) in a position-limiting way, or
the stator assembly (41) and the motor (42) are respectively arranged on both axial sides of the first valve assembly (21), and the stator assembly (41) and the motor (42) are connected with their corresponding driving housings (44) in a position-limiting way.
